# FASCICULE DE BREVET EUROPEEN

(11) **EP 2 116 446 B1**
(45) Date de publication et mention de la délivrance du brevet: **16.02.2011**
(21) Numéro de dépôt: 09305399.9
(22) Date de dépôt: 05.05.2009
(51) Int. Cl.: B62D 25/16, B62D 65/02, B62D 65/06

(54) **Support de fixation d'un élément d'habillage d'une partie de carrosserie d'un véhicule, élément d'habillage correspondant et utilisation d'un tel support de fixation**
Befestigungshalterung eines Verkleidungselements eines Fahrzeugkarosserieteils, entsprechendes Verkleidungselement und Verwendung dieser Befestigungshalterung
Support for fixing an element for covering part of the body of a vehicle, corresponding covering element and use of such a fixing support

(30) Priorité: 06.05.2008 FR 0802505
(43) Date de publication de la demande: 11.11.2009
(73) Titulaire: Renault S.A.S., 92100 Boulogne-Billancourt (FR)
(72) Inventeur: Sueur, Eric, 91090, LISSES (FR); Le Duc, Francois, 92140, CLAMART (FR)

(56) Documents cités:
- DE-A1-102004 017 771
- FR-A- 2 821 898

## Description

L'invention concerne un support de fixation d'un élément d'habillage sur une partie de carrosserie d'un véhicule, un élément d'habillage correspondant, et l'utilisation d'un tel support de fixation.

L'invention concerne plus particulièrement la fixation d'un bavolet sur le côté de caisse d'un véhicule, notamment un véhicule automobile.

Actuellement, ce type d'élément d'habillage est fixé directement sur le côté de caisse du véhicule au moyen de vis, généralement en partie supérieure et inférieure. En fonction de la forme du bavolet, il n'est toutefois pas toujours possible de le visser au côté de caisse en partie supérieure. Par ailleurs, la fixation par vis ne permet pas un montage rapide du bavolet.

L'invention vise à pallier ces inconvénients en proposant un support de fixation permettant une fixation simple et rapide d'un élément d'habillage, tel qu'un bavolet, sur une partie de carrosserie d'un véhicule.

A cet effet, l'objet de l'invention concerne un support de fixation d'un élément d'habillage sur une partie de carrosserie d'un véhicule, ledit support de fixation comprenant :
- des moyens de fixation sur ladite partie de carrosserie,
- une extrémité de maintien conformée de manière à permettre le clipage d'un bord de l'élément d'habillage entre ladite extrémité et la partie de carrosserie lorsque le support de fixation est fixé sur le côté de caisse, et
- une zone de fixation apte à recevoir un moyen de fixation pour la fixation d'une partie de l'élément d'habillage.

Le support de fixation selon l'invention permet de simplifier la fixation d'un élément d'habillage sur une partie de carrosserie grâce au clipage du bord de l'élément d'habillage. Les vis ne sont plus nécessaires au niveau de ce point de fixation, et il n'est pas nécessaire de prévoir un surplus de matière au niveau de ce bord de l'élément d'habillage pour obtenir un bon maintien.

Quant au moyen de fixation utilisé, il s'agira avantageusement de clips de fixation, tels que des plasti-rivets®, qui sont très facilement mis en place, bien que l'utilisation de vis soit envisageable.

Avantageusement, le support de fixation présente une section sensiblement en forme de L, la zone de fixation étant située sur la base du L, l'extrémité de maintien formant l'extrémité libre de l'autre partie du L.

Cette forme est particulièrement avantageuse lorsque l'élément d'habillage est un bavolet lui-même sensiblement en forme de L, et la partie de fixation est un côté de caisse. Le montant du L sera alors avantageusement positionné verticalement et fixé au côté de caisse, la base du L saillant en direction du côté de caisse. L'extrémité de maintien du support de fixation permet alors un maintien de l'élément d'habillage suivant une direction Y perpendiculaire au côté de caisse et correspondant à la direction transversale du véhicule, une fixation telle qu'un clip de fixation ou une vis assurant la fixation du dessous du bavolet sur la zone de fixation du support de fixation.

Avantageusement, l'extrémité de maintien présente une section recourbée dans une direction opposée à la surface du support de fixation destinée à venir au moins partiellement en appui contre ladite partie de carrosserie.

Plus particulièrement, la partie de la section recourbée solidaire du support de fixation forme un angle α non nul avec ledit support de fixation.

Avantageusement, le support de fixation est en tôle. Il peut ainsi être réalisé à moindre coût, et peut être facilement mis en forme par pliage ou emboutissage.

L'invention concerne également un élément d'habillage destiné à être fixé sur une partie de carrosserie d'un véhicule par au moins un support de fixation selon l'invention, l'élément d'habillage étant destiné à être fixé sur le(s) support(s) de fixation, dans lequel l'élément d'habillage présente un bord apte à être clipé entre la partie de carrosserie et l'extrémité de maintien du (des) support(s) de fixation et une partie de fixation apte à être fixée sur le(s) support(s) de fixation au niveau de la zone de fixation de ce(s) dernier(s).

Avantageusement, ledit bord de l'élément d'habillage présente sur sa face interne un logement apte à recevoir la section recourbée d'au moins un support de fixation selon l'invention.

Cette configuration améliore la mise en prise de l'extrémité de maintien du support de fixation avec le bord de l'élément d'habillage.

Avantageusement, la section recourbée et le logement seront dimensionnés de sorte que la section recourbée soit en appui sur au moins deux faces internes opposées du logement de manière à bloquer tout déplacement de l'élément d'habillage par rapport au support dans une direction perpendiculaire auxdites faces.

Plus particulièrement, ledit bord de l'élément d'habillage présente une surface interne destinée à coopérer avec l'extrémité de maintien du support de fixation, ladite surface interne formant un angle α non nul avec une surface externe dudit bord destinée à venir en appui contre la partie de caisse du véhicule.

Cette inclinaison permet d'optimiser la mise en prise du bord avec l'extrémité de maintien.

Avantageusement, la partie de fixation de l'élément d'habillage est fixée au support de fixation au moyen d'au moins un clip de fixation, du type plasti-rivet® par exemple.

L'invention concerne également l'utilisation d'au moins un support de fixation selon l'invention pour fixer un bavolet sur un côté de caisse d'un véhicule.

Plus particulièrement, le bavolet présente une section sensiblement en forme de L.

L'invention est maintenant décrite en référence aux dessins annexés, non limitatifs, dans lesquels :
- la figure 1 est une vue en coupe transversale d'un ensemble formé d'un élément d'habillage, d'une partie de carrosserie d'un véhicule et d'un support de fixation selon l'invention ;
- la figure 2 est un agrandissement de l'extrémité de maintien et du bord de l'élément d'habillage représentés sur la figure 1.

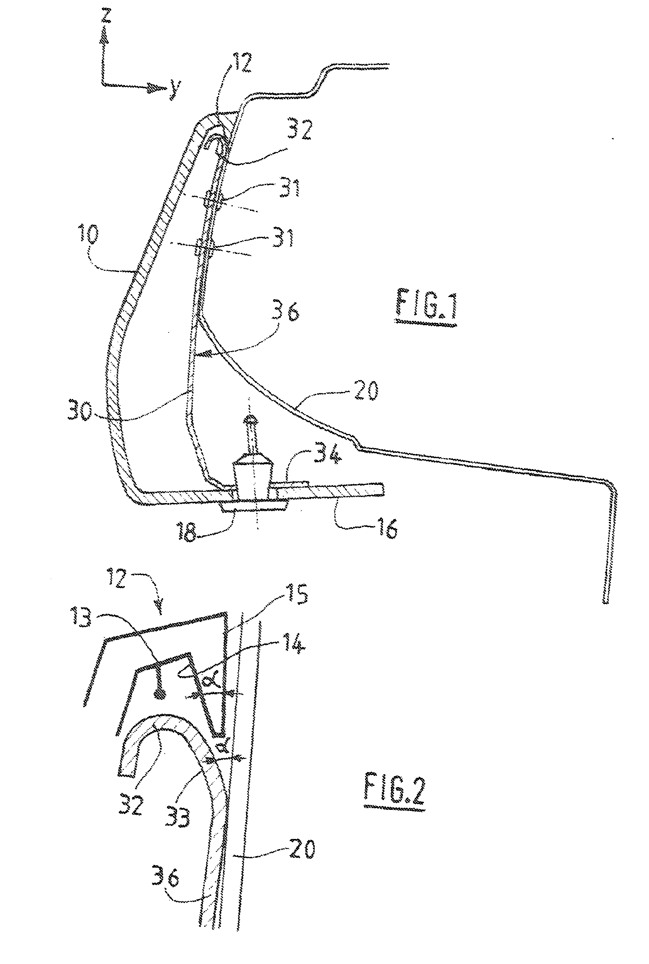

La figure 1 représente un ensemble formé d'un élément d'habillage 10, d'une partie de carrosserie 20 d'un véhicule et d'au moins un support de fixation 30.

Dans l'exemple représenté, l'élément d'habillage 10 est un bavolet et la partie de carrosserie 20 est un côté de caisse. Sur la figure 1, un seul support de fixation 30 est représenté. La fixation du bavolet est toutefois avantageusement réalisée au moyen d'au moins un support de fixation 30, de préférence plusieurs, par exemple 5 ou 6, répartis le long du bavolet 10.

Selon l'invention, chaque support de fixation 30 est fixé directement sur ladite partie de carrosserie 20, et l'élément d'habillage 10 est fixé sur les supports de fixation 30.

L"élément d'habillage 10 présente en outre :
- un bord 12 apte à être clipé entre la partie de carrosserie 20 et une extrémité de maintien 32 de chaque support de fixation 30 et,
- une partie de fixation 16 apte à être fixée sur chaque support de fixation au niveau d'une zone de fixation 34 de ce dernier.

Ce bord 12 présente sur sa face interne un logement 13 apte à recevoir l'extrémité de maintien 32 du support de fixation.

Dans l'exemple représenté, le bord 12 présente une surface interne 14 destinée à coopérer avec l'extrémité de maintien du support de fixation, ladite surface interne 14 formant un angle α non nul avec une surface externe 15 dudit bord destinée à venir en appui contre la partie de caisse 20 du véhicule.

Par ailleurs, la partie de fixation 16 de l'élément d'habillage est fixée au support de fixation au moyen de clips de fixation 18, tels que des plasti-rivets®. Un seul clip de fixation 18 par support de fixation est suffisant, on peut toutefois en prévoir plus d'un.

Dans l'exemple représenté, le bavolet 10 présente une section de forme générale sensiblement en L, le bord 12 correspondant au bord libre du montant du L, la partie de fixation 16 étant située sur la base du L.

Selon l'invention, le support de fixation 30 comprend :
- des moyens de fixation 31 sur ladite partie de carrosserie 20,
- une extrémité de maintien 32 conformée de manière à permettre le clipage du bord 12 de l'élément d'habillage entre ladite extrémité et la partie de carrosserie 20 lorsque le support de fixation est fixé sur le côté de caisse, et
- une zone de fixation 34 apte à recevoir un moyen de fixation pour la fixation de la partie 16 de l'élément d'habillage.

Dans l'exemple, le support de fixation 30 présente une section sensiblement en forme de L, la zone de fixation 34 étant située sur la base du L, l'extrémité de maintien 32 formant l'extrémité libre de l'autre partie du L.

En outre, l'extrémité de maintien 32 présente une section recourbée dans une direction opposée à la surface 36 du support de fixation destinée à venir en appui au moins partiellement contre ladite partie de carrosserie.

En particulier, la partie 33 de la section recourbée 32 solidaire du support de fixation forme un angle α non nul avec ledit support de fixation, et donc avec la surface du côté de caisse 20 sur laquelle le support est en appui.

Le support de fixation peut être avantageusement réalisé en tôle, l'extrémité de maintien 32 étant par exemple obtenue par simple pliage.

Le montage du bavolet 10 est réalisé de la manière suivante.

Les supports de fixation sont tout d'abord fixés sur le côté de caisse 20 par les moyens de fixation 31, qui sont par exemple des vis, des rivets, des clips,.... Ces moyens de fixation 31 sont par exemple au nombre de deux, et sont de préférence décalés verticalement et horizontalement afin d'éviter toute rotation du support de fixation 30 par rapport au côté de caisse après fixation.

Le bavolet 10 est alors approché des supports de fixation 30, et le bord 12 du bavolet est clipé sur l'extrémité de maintien 32 de chaque support de fixation, la surface interne 14 du bord étant en appui contre l'extrémité 32, tandis que la surface externe 15 est en appui contre le côté de caisse 20. L'accostage du bord 12 est facilité par l'inclinaison particulière (angle a) des parties 33 et 14.

Le clipage étant réalisé, le bavolet est alors maintenu en Y par rapport au côté de caisse.

Il suffit alors de fixer définitivement le bavolet sur chaque support de fixation 30 en mettant en place le clip de fixation 18 afin de solidariser les parties de fixation 16 et 34.

On obtient ainsi une fixation simple et rapide du bavolet sur le côté de caisse. Une telle fixation présente également l'avantage d'être invisible, les clips de fixation 18 étant situés en zone inférieure du bavolet, et peu coûteuse, les supports de fixation 30 en tôle étant peu coûteux à réaliser.

## Revendications

1. Support de fixation (30) d'un élément d'habillage (10) sur une partie de carrosserie (20) d'un véhicule, ledit support de fixation comprenant :
- des moyens de fixation (31) sur ladite partie de carrosserie,
- une extrémité de maintien (32) conformée de manière à permettre le clipage d'un bord (12) de l'élément d'habillage entre ladite extrémité et la partie de carrosserie lorsque le support de fixation est fixé sur le côté de caisse, et
- une zone de fixation (34) apte à recevoir un moyen de fixation (18) pour la fixation d'une partie (16) de l'élément d'habillage.

2. Support de fixation selon la revendication 1, **caractérisé en ce qu'**il présente une section sensiblement en forme de L, la zone de fixation (34) étant située sur la base du L, l'extrémité de maintien (32) formant l'extrémité libre de l'autre partie du L.

3. Support de fixation selon l'une des revendications 1 ou 2, **caractérisé en ce que** l'extrémité de maintien (32) présente une section recourbée dans une direction opposée à la surface (36) du support de fixation destinée à venir au moins partiellement en appui contre ladite partie de carrosserie.

4. Support de fixation selon la revendication 3, **caractérisé en ce que** la partie (33) de la section recourbée solidaire du support de fixation forme un angle a non nul avec ledit support de fixation.

5. Support de fixation selon l'une des revendications 1 à 4, **caractérisé en ce qu'**il est en tôle.

6. Elément d'habillage (10) en combinaison avec le support de fixation (30) selon l'une des revendications 1 à 5, l'élément d'habillage étant destiné à être fixé sur le(s) support(s) de fixation, dans lequel l'élément d'habillage présente un bord (12) apte à être clipé entre la partie de carrosserie et l'extrémité de maintien du (des) support(s) de fixation et une partie de fixation (16) apte à être fixée sur le(s) support(s) de fixation au niveau de la zone de fixation (34) de ce(s) dernier(s).

7. Elément d'habillage (10) en combinaison avec le support de fixation (30) selon la revendication 6, **caractérisé en ce que** ledit bord (12) de l'élément d'habillage présente sur sa face interne un logement (13) apte à recevoir la section recourbée d'au moins le support de fixation selon la revendication 3.

8. Elément d'habillage (10) en combinaison avec le support de fixation (30) selon la revendication 7, **caractérisé en ce que** ledit bord (12) de l'élément d'habillage présente une surface interne (14) destinée à coopérer avec l'extrémité de maintien du support de fixation, ladite surface interne formant un angle α non nul avec une surface externe (15) dudit bord destinée à venir en appui contre la partie de caisse du véhicule.

9. Elément d'habillage (10) en combinaison avec le support de fixation (30) selon l'une des revendications 7 ou 8, **caractérisé en ce que** la partie de fixation (16) de l'élément d'habillage est fixée au support de fixation au moyen d'au moins un clip de fixation (18).

10. Utilisation d'au moins un support de fixation selon l'une des revendications 1 à 6 pour fixer un bavolet sur un côté de caisse d'un véhicule.

## Claims

1. Bracket (30) for fastening a trim element (10) to a bodywork part (20) of a vehicle, said fastening bracket comprising:
- means (31) for fastening to said bodywork part,
- a holding end (32) shaped in such a way that one edge (12) of the trim element can be clip-fastened between said end and the bodywork part when the fastening bracket is fastened on the body side, and
- a fastening zone (34) able to hold a fastening means (18) for fastening a part (16) of the trim element.

2. Fastening bracket according to Claim 1, **characterized in that** it has an approximately L-shaped section, the fastening zone (34) being located on the base of the L, the holding end (32) forming the free end of the other part of the L.

3. Fastening bracket according to either of Claims 1 and 2, **characterized in that** the holding end (32) has a section curved in the opposite direction to the surface (36) of the fastening bracket and intended to bear at least partially against said bodywork part.

4. Fastening bracket according to Claim 3, **characterized in that** the part (33) of the curved section integral with the fastening bracket forms a non-zero angle α with said fastening bracket.

5. Fastening bracket according to one of Claims 1 to 4, **characterized in that** it is made of sheet metal.

6. Trim element (10) in combination with the fastening bracket (30) according to one of Claims 1 to 5, the trim element being intended to be fastened to the fastening bracket(s), in which the trim element has an edge (12) able to be clip-fastened between the bodywork part and the holding end of the fastening bracket(s) and a fastening part (16) able to be fastened to the fastening bracket(s) at the fastening zone (34) of the latter.

7. Trim element (10) in combination with the fastening bracket (30) according to Claim 6, **characterized in that** said edge (12) of the trim element has on its internal face a housing (13) able to hold the curved section of at least the fastening bracket according to Claim 3.

8. Trim element (10) in combination with the fastening bracket (30) according to Claim 7, **characterized in that** said edge (12) of the trim element has an internal surface (14) intended to engage with the holding end of the fastening bracket, said internal surface forming a non-zero angle α with an external surface (15) of said edge, said external surface being intended to bear against the body part of the vehicle.

9. Trim element (10) in combination with the fastening bracket (30) according to either of Claims 7 and 8, **characterized in that** the fastening part (16) of the trim element is fastened to the fastening bracket by means of at least one fastening clip (18).

10. Use of at least one fastening bracket according to one of Claims 1 to 6 to fasten a front lower panel to a body side of a vehicle.

## Patentansprüche

1. Halter (30) zur Befestigung eines Verkleidungselements (10) an einem Karosserieteil (20) eines Fahrzeugs, wobei der Befestigungshalter Folgendes umfasst:
- Mittel (31) zur Befestigung an dem Karosserieteil,
- ein Halteende (32), das so konfiguriert ist, dass es die Rastverriegelung eines Rands (12) des Verkleidungselements zwischen dem Ende und dem Karosserieteil gestattet, wenn der Befestigungshalter auf der Aufbauseite befestigt ist, und
- ein Befestigungsbereich (34), der ein Befestigungsmittel (18) zur Befestigung eines Teils (16) des Verkleidungselements aufnehmen kann.

2. Befestigungshalter nach Anspruch 1, **dadurch gekennzeichnet, dass** er einen im Wesentlichen L-förmigen Abschnitt aufweist, wobei sich der Befestigungsbereich (34) auf der Basis des L befindet, wobei das Halteende (32) das freie Ende des anderen Teils des L bildet.

3. Befestigungshalter nach Anspruch 1 oder 2, **dadurch gekennzeichnet, dass** das Halteende (32) einen Abschnitt aufweist, der in einer zur Fläche (36) des Befestigungshalters entgegengesetzten Richtung gekrümmt ist und zumindest teilweise in Anlage an den Karosserieteil kommen soll.

4. Befestigungshalter nach Anspruch 3, **dadurch gekennzeichnet, dass** der fest mit dem Befestigungshalter verbundene Teil (33) des gekrümmten Abschnitts mit dem Befestigungshalter einen Winkel α von ungleich null bildet.

5. Befestigungshalter nach einem der Ansprüche 1 bis 4, **dadurch gekennzeichnet, dass** er aus Blech besteht.

6. Verkleidungselement (10) in Kombination mit dem Befestigungshalter (30) nach einem der Ansprüche 1 bis 5, wobei das Verkleidungselement an dem (den) Befestigungshalter(n) befestigt werden soll, wobei das Verkleidungselement einen Rand (12), der zwischen dem Karosserieteil und dem Halteende (32) des (der) Befestigungshalter(s) rastverriegelt werden kann, und einen Befestigungsteil (16), der zwischen dem (den) Befestigungshalter(n) im Befestigungsbereich (34) dieses (dieser) letzteren befestigt werden kann, aufweist.

7. Verkleidungselement (10) in Kombination mit dem Befestigungshalter (30) nach Anspruch 6, **dadurch gekennzeichnet, dass** der Rand (12) des Verkleidungselements auf seiner Innenseite eine Aufnahme (13) aufweist, die den gekrümmten Abschnitt mindestens des Befestigungshalters nach Anspruch 3 aufnehmen kann.

8. Verkleidungselement (10) in Kombination mit dem Befestigungshalter (30) nach Anspruch 7, **dadurch gekennzeichnet, dass** der Rand (12) des Verkleidungselements eine Innenfläche (14) aufweist, die mit dem Halteende des Befestigungshalters zusammenwirken kann, wobei die Innenfläche einen Winkel α von ungleich null mit einer Außenfläche (15) des Rands bildet, der in Anlage an den Karosserieteil des Fahrzeugs kommen soll.

9. Verkleidungselement (10) in Kombination mit dem Befestigungshalter (30) nach Anspruch 7 oder 8, **dadurch gekennzeichnet, dass** der Befestigungsteil (16) des Verkleidungselements mittels mindestens einer Befestigungsklemme (18) an dem Befestigungshalter befestigt ist.

10. Verwendung mindestens eines Befestigungshalters nach einem der Ansprüche 1 bis 6 zum Befestigen eines Lappens an einer Aufbauseite eines Fahrzeugs.
